(19) Europäisches Patentamt
European Patent Office
Office européen des brevets

(11) **EP 2 011 082 B1**

(12) **EUROPÄISCHE PATENTSCHRIFT**

(45) Veröffentlichungstag und Bekanntmachung des Hinweises auf die Patenterteilung:
**11.06.2014   Patentblatt 2014/24**

(21) Anmeldenummer: **07724529.8**

(22) Anmeldetag: **24.04.2007**

(51) Int Cl.:
***G06T 11/00*** *(2006.01)*

(86) Internationale Anmeldenummer:
**PCT/EP2007/003599**

(87) Internationale Veröffentlichungsnummer:
**WO 2007/121989 (01.11.2007 Gazette 2007/44)**

(54) **VORRICHTUNG UND VERFAHREN ZUM ERZEUGEN EINER ZWEIDIMENSIONALEN DARSTELLUNG EINES BELIEBIG INNERHALB EINES OBJEKTS ANGEORDNETEN OBJEKTABSCHNITTS**

DEVICE AND METHOD FOR GENERATING A TWO-DIMENSIONAL REPRESENTATION OF ANY OBJECT SECTION WITHIN AN OBJECT

DISPOSITIF ET PROCÉDÉ D'OBTENTION D'UNE REPRÉSENTATION BIDIMENSIONNELLE D'UNE SECTION D'OBJET DISPOSÉE DE MANIÈRE QUELCONQUE À L'INTÉRIEUR D'UN OBJET

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **25.04.2006   DE 102006019060**

(43) Veröffentlichungstag der Anmeldung:
**07.01.2009   Patentblatt 2009/02**

(73) Patentinhaber: **Fraunhofer-Gesellschaft zur Förderung der angewandten Forschung e.V. 80686 München (DE)**

(72) Erfinder:
• **SCHOLZ, Oliver**
**91096 Möhrendorf (DE)**
• **KOSTKA, Günther**
**91056 Erlangen (DE)**
• **WENZEL, Thomas**
**90763, Fürth (DE)**

(74) Vertreter: **Zimmermann, Tankred Klaus et al Schoppe, Zimmermann, Stöckeler & Zinkler Patentanwälte Postfach 246 82043 Pullach bei München (DE)**

(56) Entgegenhaltungen:
**EP-A- 1 225 444**

• **JING LIU ET AL: "GENERALIZED TOMOSYNTHESIS FOR FOCUSING ON AN ARBITRARY SURFACE" IEEE TRANSACTIONS ON MEDICAL IMAGING, IEEE SERVICE CENTER, PISCATAWAY, NJ, US, Bd. 8, Nr. 2, 1. Juni 1989 (1989-06-01), Seiten 168-172, XP000110780 ISSN: 0278-0062**
• **KAMPP T D: "The backprojection method applied to classical tomography" MEDICAL PHYSICS USA, Bd. 13, Nr. 3, Mai 1986 (1986-05), Seiten 329-333, XP002466779 ISSN: 0094-2405**
• **OZKAN M K ET AL: "ADAPTIVE MOTION-COMPENSATED FILTERING OF NOISY IMAGE SEQUENCES" IEEE TRANSACTIONS ON CIRCUITS AND SYSTEMS FOR VIDEO TECHNOLOGY, IEEE SERVICE CENTER, PISCATAWAY, NJ, US, Bd. 3, Nr. 4, 1. August 1993 (1993-08-01), Seiten 277-290, XP000414654 ISSN: 1051-8215**
• **DOBBINS J T ET AL: "Digital x-ray tomosynthesis: current state of the art and clinical potential" PHYSICS IN MEDICINE AND BIOLOGY, TAYLOR AND FRANCIS LTD. LONDON, GB, Bd. 48, Nr. 19, 7. Oktober 2003 (2003-10-07), Seiten R65-R106, XP002277335 ISSN: 0031-9155**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung bezieht sich auf eine Vorrichtung und ein Verfahren zum Erzeugen einer zweidimensionalen Darstellung eines beliebig innerhalb eines Objekts angeordneten Objektabschnitts, wie es z. B. bei der Verarbeitung von Röntgenbilddaten in der industriellen Qualitätskontrolle an Produkten Einsatz findet.

Das technische Einsatzgebiet der hier beschriebenen Erfindung ist die Verarbeitung von Röntgenbilddaten, insbesondere in der industriellen Qualitätskontrolle an Produkten, die mittels Röntgenstrahlung durchgeführt wird. Als einer der wichtigsten Anwendungsfälle sei hier die Detektion von sogenannten Lunkern oder Porositäten in Gussteilen wie z.B. Aluminiumrädern genannt. Die besondere Schwierigkeit liegt hierbei darin, dass die Röntgenbilddaten prinzipbedingt mit einem Bildrauschen behaftet sind, die eine (automatische) Erkennung der Gussfehler negativ beeinflusst. Um das Bildrauschen zu reduzieren, wird daher üblicherweise der Bildinhalt über mehrere gleichartige Aufnahmen gemittelt. Die vorliegende Erfindung bezieht sich neben der Röntgenbildtechnik allgemein auf bildgebende Verfahren, wie beispielsweise auch Ultra-Schall-Verfahren, abbildendes Radar etc.

Bei der Produktion von Gussteilen kann es zu Herstellungsfehlern, wie z. B. Luftblasen, Porositäten oder Rissen kommen, welche die mechanischen Eigenschaften und damit die Zuverlässigkeit signifikant beeinflussen können. Daher ist besonders bei sicherheitskritischen Teilen im Automobil- oder Luftfahrtbereich eine zuverlässige Prüfung derartiger Teile unerlässlich. Solche Fehler können in Extremfällen z. B. in Aluminiumrädern bei Belastung zu einem Speichenbruch führen, oder auch nur bei der weiteren Bearbeitung (Abspanung) zu optischen Beeinträchtigungen führen, die schließlich Grund für eine Aussonderung sind, was aus wirtschaftlichen Gründen möglichst früh in der Wertschöpfungskette geschehen soll.

Da derartige Produktionsfehler im Material verborgen sind, werden im industriellen Bereich vorwiegend mittels Röntgentechnik Aufnahmen der relevanten Bereiche der Gussteile erstellt, in denen sich dann Hohlräume durch die geringere Schwächung der Röntgenstrahlen im Vergleich zur Umgebung in Form von Helligkeitsschwankungen niederschlagen. Die Helligkeitsschwankungen in diesen Bilddaten werden dann meist automatisch verarbeitet, von geeigneter Software detektiert und führen dann gegebenenfalls zu einer Aussonderung des Prüflings.

Ein Problem bereitet dabei das unvermeidliche Rauschen, das in den Aufnahmen auftritt. Die Helligkeitsschwankungen, die von Porositäten verursacht werden, liegen insbesondere bei kleinen Porositäten im Bereich der vom Rauschen verursachten Helligkeitsschwankungen, so dass eine Reduktion des Bildrauschens die spätere Weiterverarbeitung der Bilddaten wesentlich vereinfacht. Da das Bildrauschen direkt von der Anzahl der auftreffenden Röntgenquanten abhängt, wird im Allgemeinen über eine Anzahl gleichartiger Aufnahmen oder eine längere Belichtungszeit gemittelt, um das Rauschen auf diese Art und Weise zu reduzieren. Durch die Mittelung werden die in den Bildern konstanten Bildteile hervorgehoben, und gleichzeitig die veränderlichen Bildteile (also das Rauschen) reduziert. Dazu ist es notwendig, den Prüfling still zu halten, um Fehler durch Verwackeln zu vermeiden.

Da die Gussteile typischerweise größer als der zur Verfügung stehende Röntgensensor sind, erfolgt die Prüfung in unterschiedlichen Schritten, wobei in jedem Schritt ein Teil des Prüflings zweidimensional auf einem Detektor/Sensor abgebildet wird. Dazu werden entweder Rontgenquelle/Detektor oder der Prüfling (oder beides gleichzeitig) bewegt, um den nächsten Prüfausschnitt auf dem Detektor abzubilden. Da es für die Röntgenbilder unerheblich ist, ob der neue Blickwinkel durch Bewegung des Prüflings oder der Aufnahmeeinheit oder von beidem entstanden ist, wird im Weiteren davon ausgegangen, dass lediglich der Prüflings bewegt wird.

Da, wie bereits erwähnt, der Prüfling bei der Aufnahme der zu mittelnden Bildserie still stehen soll, führt eine Prüfanlage typischerweise eine Sequenz von Aufnahme-Bewegung-Ablaufen durch. Bei jedem dieser Abläufe wird der Prüfling beschleunigt und abgebremst, sobald die nachste Prufposition erreicht ist, um dann eine weitere Aufnahmeserie zu machen. Die Beschleunigung (und das Abbremsen) sind dabei durch das Hantierungssystem begrenzt, da z.B. ein abrupt abgebremstes Aluminiumrad in einem Greifer einfach durchrutscht, wenn der Anpressdruck nicht ausreichend ist. Ferner muss abgewartet werden, bis eventuelle durch den Abbremsvorgang hervorgerufene mechanische Schwingungen abgeklungen sind, um die durch Bewegungen hervorgerufene Unschärfe zu vermeiden, bevor jeweils mit der Aufnahmeserie begonnen werden kann.

Die Dauer der Aufnahmeserie hängt vom gewünschten Maß der Rauschreduzierung ab, liegt aber typischerweise bei ca. 10 - 16 Aufnahmen, was zu einer Reduktion des Rauschens um den Faktor 4 führt. Längere Zeiten würden das Rauschen zwar weiter reduzieren, sind aber in der Regel nicht durchführbar, da die Prüfung eines Teils in möglichst kurzer Zeit durchgeführt werden soll.

Bei einem Alummiumrad, das beispielsweise in insgesamt 30 Bildaufnahmen zu prüfen ist, entfallen auf die Beschleunigung/Abbremsung des Rades pro Bild typischerweise 500 ms, und die Integration von 16 Aufnahmen bei 25 Vollbildern pro Sekunde dauert weitere 16/25 s = 640 ms. Daraus ergibt sich eine Prüfzeit von ca. 35 Sekunden für das gesamte Rad.

Der Hauptnachteil des Standes der Technik ist also der hohe Zeitaufwand, der für das wiederholte Beschleunigen und Abbremsen des Prüflings notwendig ist.

Weiterhin ist der Stand der Technik bei derartiger Bildaufnahme naturgemäß auf die zweidimensionale Projektion eines dreidimensionalen Objekts beschränkt, so dass eine Auswertung der Tiefeninformation im Einzelbild nicht stattfinden kann. Außerdem ist es möglich, dass Materialfehler durch andere Bildteile in der Projektion in einem Blickwinkel verdeckt werden, so dass es nötig ist, jede Stelle des Prüflings aus mehreren Perspektiven zu projizieren, um diese Verdeckungen in wenigstens einer von mehreren Ansichten zu detektieren.

Ferner ist die Verfolgung von möglichen Materialdefekten in verrauschten, ungemittelten Einzelbildern, und die algorithmische Aussortierung von Artefakten über verschiedene Fehlereigenschaften bekannt.

Der Stand der Technik beschreibt ferner die Tangentialradiographie, die z.B. in der DE 695 22 751 T2 beschrieben wird. Bekannt sind weiterhin rein zweidimensionale Verfahren, die als (digitale) Laminographie bezeichnet werden. Dabei nimmt eine Kamera aus verschiedenen Winkeln ein Objekt auf, um daraus eine ebene Fläche scharf und außerhalb dieser Ebene liegende Objekte unscharf abzubilden. Jing Liu et al., "Generalized Tomosynthesis for Focusing on an Arbitrary Surface", in IEEE Transactions on Medical Imaging, Vol. 8, No. 2, June 1989, wird ein Tomosynthese-Verfahren beschrieben, mit dem ein Rekonstruktionsalgorithmus, ausgehend von verschiedenen Tomogrammen, Bildpunkte in einer Bildebene zusammensetzt, wobei die Bildpunkte einzelner Tomogramme derart überlagert werden, dass sich diejenigen Bildpunkte in einem interessierenden Bildausschnitt konstruktiv überlagern, wohingegen sich solche Punkte, die sich nicht im Bildausschnitt befinden, zufällig überlagern. Dabei wird ein allgemeines Konzept offenbart, welches auch erlaubt, dreidimensionale Strukturen basierend auf den einzelnen Tomogrammen zusammenzusetzen.

Die EP 1 225 444 A2 offenbart eine Röntgeneinrichtung zur Erstellung von Schichtbildern eines Untersuchungsobjekts mittels eine Tomosynthese. Dabei befindet sich eine Röntgenquelle über einem Untersuchungsobjekt, das wiederum über einem Röntgendetektor angeordnet ist. Das Untersuchungsobjekt befindet sich dabei auf einem verschiebbar gelagerten Tisch. Dadurch kann eine Anzahl von Einzelbildern aufgenommen werden, die verschobene Bildausschnitte des Untersuchungsobjektes darstellen. Zur Überlagerung der einzelnen Teilbilder zu einem Gesamtbild werden die Verschiebungen des Tisches, die beispielsweise über Potentiometer erfasst werden können, herangezogen.

Thomas D. Kampp, "The backprojection method applied to classical tomography", in Med. Phys. 13 (3), May/June 1986, wird ein Projektionsverfahren beschrieben, das es erlaubt, basierend auf Einzeltomogrammen, Schnittbilder zu erzeugen, wobei ein Schnittbild einer Ebene entspricht, die sechs Freiheitsgrade, d.h. drei translatorische und drei rotatorische aufweist. Die Einzeltomogramme können dabei mit klassischen Tomographen erzeugt werden, wobei das zu untersuchende Objekt dabei verschiedene Bewegungen beschreiben kann, wie beispielsweise lineare, zirkulare oder rotatorische Bewegungen.

Die Patentanmeldung US2003/0043962 A1 offenbart ein Verfahren zur Bestimmung der Position des Bildes eines Zielobjektes bzw. der Position der Röntgenquelle, wenn diese zur Aufnahme mehrerer zwei-dimensionaler Projektionsbilder für digitale Tomosynthese relativ zueinander bewegt werden. Dazu wird mindestens eine Markierung zwischen Röntgenquelle und -detektor angeordnet. Die sich aus der Bewegung der Röntgenquelle während der Tomosynthese ergebende Verschiebung des Objektbildes wird aus der leicht erkennbaren Verschiebung der Abbildung der Markierung berechnet.

Es ist die Aufgabe der vorliegenden Erfindung eine Vorrichtung und ein Verfahren zum Prüfen von Objekten zu schaffen, die die Darstellung eines beliebigen Abschnitts in dem Objekt ermöglichen.

Diese Aufgabe wird durch eine Vorrichtung gemäß Anspruch 1 und ein Verfahren gemäß Anspruch 7 gelöst.

Der Kerngedanke der vorliegenden Erfindung besteht darin, dass aus einer kontinuierlichen rauschbehafteten Bildsequenz nun rauschreduzierte Einzelbilder erzeugt werden, wobei diese Einzelbilder beliebige Schnittflächen durch das zu untersuchende Objekt zeigen, und eine Mehrzahl dieser Bilder von verschiedenen Objektabschnitten gleichzeitig erzeugt werden kann. Dies wird erreicht, indem eine der Bewegung der interessierenden Schnittfläche entsprechende Projektionsvorschrift auf die Sequenz der Bilder angewendet wird, so dass nun die interessierenden Punkte der Schnittfläche aufeinander zu liegen kommen und dadurch eine Rauschreduktion der Einzelbilder erreicht wird.

Die vorliegende Erfindung lehrt die Prüfung von dreidimensionalen Objekten in der kontinuierlichen Bewegung, ohne dass das Objekt für die einzelnen Bildaufnahmen anzuhalten ist. Aus dem kontinuierlichen Strom von rauschbehafteten Bilddaten wird durch geeignete Algorithmik eine Serie von rauschreduzierten Einzelbildern gewonnen, die z. B. durch die herkömmlichen Bildverarbeitungsalgorithmen geprüft werden können. Erfindungsgemäß wird ein beliebiger Schnitt (Projektionsfläche) durch das zu prüfende Objekt scharf abgebildet, wobei gleichzeitig außerhalb der Schnittebene liegende Bereiche verwischt werden (Tomographie/Laminographie-Effekt). Ferner kann eine Mehrzahl solcher Projektionsebenen verschiedener Objektabschnitte gleichzeitig erzeugt werden. Von der oben beschriebenen planaren Computertomografie (PCT), die auf einer Rekonstruktion einer planaren Ebene basiert, unterscheidet sich das erfindungsgemäße Verfahren dadurch, dass eine beliebig im Raum liegende gekrümmte Fläche rauschreduziert abgebildet wird.

Gegenüber den im Stand der Technik bekannten Ansätzen erreicht die vorliegende Erfindung eine höhere Prüfgeschwindigkeit und einen höheren Prüfdurchsatz. Entfällt im Stand der Technik typischerweise die Hälfte der Prüfzeit pro Prüfposition auf die Positionierung eines Prüflings, so kann mit dem erfindungsgemäßen Ansatz der Durchsatz einer Prüfmaschine praktisch verdoppelt werden. Damit reduzieren sich für den Anwender nicht nur die Anschaffungskosten, sondern auch die Wartungskosten, denn sowohl Aufnahmezeit (z. B. Bildverstärker) als auch Röntgenröhre und mechanische Komponenten unterliegen einem Verschleiß, der proportional zu der Betriebszeit ist. Dies wird durch die Möglichkeit zur Erstellung mehrerer Projektionsebenen entlang beliebiger Objektabschnitte weiter begünstigt.

Anders als bei der erwähnten Laminographie, bei der aus mehreren Einzelaufnahmen das Bild berechnet wird, wobei von Kamera, Objekt und Röntgenquelle jeweils zwei koordiniert zu verfahren sind, ist erfindungsgemäß eine einfache, kontinuierliche Bewegung ausreichend.

Im Gegensatz zur Tangentialradiographie ist das hier beschriebene Verfahren nicht auf die Abbildung eines rotationssymmetrischen Objektes, das rotatorisch um seine Drehachse bewegt wird, beschränkt. Stattdessen kann die Anordnung von zu prüfendem Objekt, Röntgenquelle und Detektor beliebig sein, solange eine Abbildung des Objektes gewährleistet ist. Die Bewegung des Objektes kann beliebig sein, solange diese Bewegung des Objektes aus den Bilddaten extrahiert werden kann, beispielsweise basierend auf der Verfolgung markanter Objektmerkmale oder einer eingearbeiteten Probe.

Bevorzugte Ausführungsbeispiele der vorliegenden Erfindung werden nachfolgend Bezug nehmend auf die beiliegenden Zeichnungen näher erläutert. Es zeigen

Fig. 1          ein Blockschaltbild der erfindungsgemäßem Vorrichtung gemäß einem bevorzugten Ausführungsbeispiel;

Fig. 2(a)      eine schematische Darstellung einer Momentaufnahme eines zweidimensional bewegten Objekts zu einem ersten Zeitpunkt;

Fig. 2(b)      eine schematische Darstellung einer Momentaufnahme eines zweidimensional bewegten Objekts zu einem zweiten Zeitpunkt;

Fig. 2 (c)     eine schematische Darstellung einer Momentaufnahme eines zweidimensional bewegten Objekts zu einem dritten Zeitpunkt;

Fig. 3 (a)     eine schematische Darstellung einer Momentaufnahme eines dreidimensional bewegten Objekts zu einem ersten Zeitpunkt;

Fig. 3 (b)     eine schematische Darstellung einer Momentaufnahme eines dreidimensional bewegten Objekts zu einem zweiten Zeitpunkt;

Fig. 3 (c)     eine schematische Darstellung einer Momentaufnahme eines dreidimensional bewegten Objekts zu einem dritten Zeitpunkt;

Fig. 4          eine schematische Darstellung eines um seine Achse rotierenden Zylinders;

Fig. 5 (a)     eine schematische Darstellung eines um seine Achse rotierenden Zylinders zu einem ersten Zeitpunkt t1;

Fig. 5 (b)     eine schematische Darstellung eines um seine Achse rotierenden Zylinders zu einem zweiten Zeitpunkt t2;

Fig. 5 (c)     eine schematische Darstellung eines um seine Achse rotierenden Zylinders zu einem dritten Zeitpunkt t3;

Fig. 5 (d)     eine schematische Darstellung der Bildebene mit der Zusammenfassung der Bildpunkte aus Fig. 5 (a)-(c)

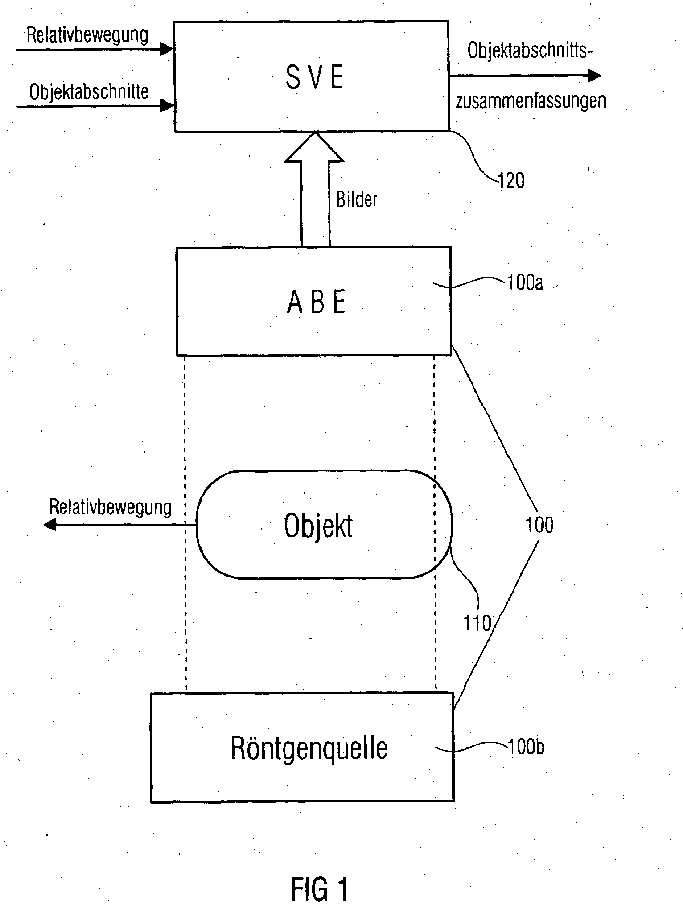

Fig. 1 zeigt eine Abbildungseinrichtung (ABE) 100a mit einer Röntgenquelle 100b, die Bilder eines Objektes 110 erzeugt und an eine Signalverarbeitungseinrichtung (SVE) 120 weiterleitet. Die Abbildungseinrichtung 100a, die Röntgenquelle 100b und das Objekt 110 führen dabei eine Relativbewegung zueinander aus. Die Signalverarbeitungseinrichtung 120 empfängt Information über die Relativbewegung zwischen der Abbildungseinrichtung 100 und dem Objekt 110, sowie Information über den zu untersuchenden Objektabschnitt, bzw. die zu untersuchenden Objektabschnitte. Aus diesen Informationen und den von der Abbildungseinrichtung 100 gelieferten Bildern, erstellt die Signalverarbeitungseinrichtung 120 eine Objektabschnittszusammenfassung und gibt diese aus. Die Signalverarbeitungseinrichtung 120 ist dabei ausgebildet, um mehrere verschiedene Objektabschnittsinformationen zu empfangen, und entsprechend mehrere Objektabschnittszusammenfassungen gleichzeitig zu bestimmen und auszugeben.

Bei einer Realisierung des bevorzugten Ausführungsbeispiels ist der Ausgangspunkt das Prinzip der Aufnahme und Mittelung von Röntgenbilddaten zur Rauschreduzierung. Wird das Prüfobjekt während der Aufnahme bewegt, kann nicht mehr der einfache Mittelwert $P_{avg}(x,y)$ für jeden Punkt mit den Koordinaten (x, y) gebildet werden:

$$P_{avg}(x, y) = 1/n \sum_{t=1}^{n} P_t(x, y),$$

mit

$P_{avg}(x,y)$     :Mittelwert
$x,y$          :Koordinaten
$n$            :Anzahl der Aufnahmen über die gemittelt wird
$P_t(x,y)$      :Bildintensität des Einzelbildes.

Da die Objektpunkte bei einem sich bewegenden Objekt auf jedem Röntgenbild an anderer Stelle liegen, muss die Zeitabhängigkeit der Koordinaten berücksichtigt werden. Anstatt also mit festen Koordinaten (x, y) pro Pixel zu arbeiten werden nun von der Zeit (bzw. der Bildnummer) abhängige Koordinaten (x(t), y(t)) verwendet. Die Berechnung eines Bildpunktes im Ergebnisbild ergibt sich damit zu:

$$P_{avg}(x, y) = 1/n \sum_{t=1}^{n} P_t(x(t), y(t))$$

Die Koordinaten müssen geeignet bestimmt werden. Die Bildpunkte eines Bildes stellen die zweidimensionale Projektion eines dreidimensionalen Objekts dar. Die Koordinaten x(t), y (t) im Bild $B_t = \{P_t(x,y)\}$ werden für die Summation jedes Bildpunktes des Ergebnisbildes derart bestimmt, dass die Projektionen der Volumenpunkte des Objekts, deren Position im Raum sich mit jeder Aufnahme ändert, aufeinander zu liegen kommen. Die Volumenpunkte V(x(t),y(t),z(t)) des Objekts beschreiben während der Bewegung einen Pfad im Raum, woraufhin auch die Projektionen dieser Punkte einen Pfad auf der Projektionsebene beschreiben. Anhand dieses Pfades werden die Bildpunkte in aufeinanderfolgenden Projektionen einander zugeordnet.

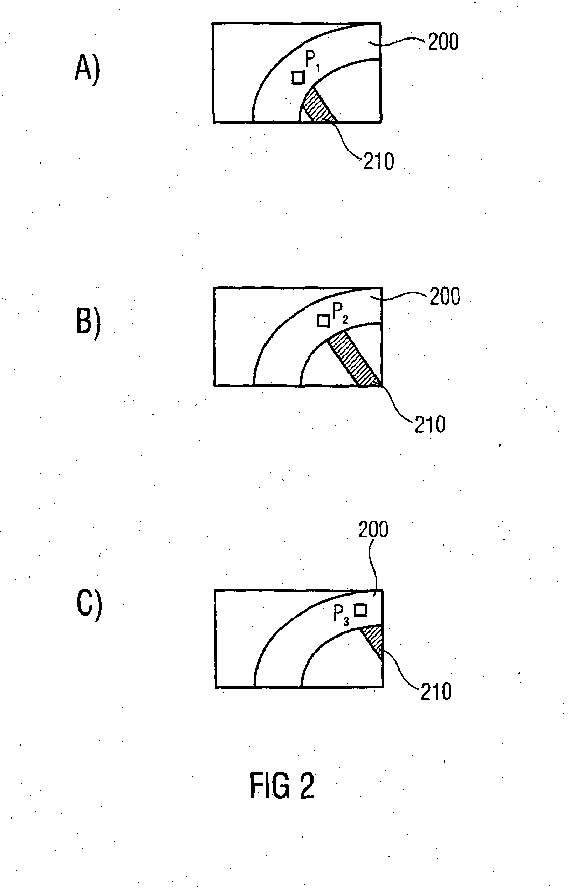

Zur Veranschaulichung diene der einfache zweidimensionale Fall: Im Falle einer rein zweidimensionalen Bewegung des Objektes vor der Kamera (translatorisch und/oder rotatorisch in der Kameraebene, aber nicht Z-Richtung, d. h. z(t) = konstant) kann zu jedem in allen Bildern einer Sequenz der Länge L vorkommenden Bildpunkte ein geeigneter Mittelwert gebildet werden. Dieser Fall ist in Fig. 2 illustriert und wird nun im Detail erläutert.

Fig. 2 (a)-(c) zeigen eine Bildsequenz von drei zeitlich aufeinanderfolgenden Röntgenaufnahmen. In jeder der drei Momentaufnahmen ist ein Teilabschnitt eines sich drehenden Rades 200, mit einer Speiche 210 und einem Punkt P zu sehen, wobei sich der Punkt P relativ zum Bildausschnitt bewegt, was durch die Indizes $P_1$, $P_2$ und $P_3$ verdeutlicht wird.

Zu jedem projizierten Punkt des Objektes (hier ein Rad) lässt sich eine zusammenhängende Sequenz der Länge L (hier L=3 Bilder) von Projektionspunkten finden, um die Mittelwertbildung in der beschriebenen Weise durchzuführen. Die maximal mögliche Länge $L_{max}$ ist durch die Bewegungsgeschwindigkeit des Objekts und die Aufnahmefrequenz der Bildaufnahmeeinheit gegeben; sie kann je nach gewünschter Rauschreduzierung geeignet gewählt werden.

Um nun aus der Bildsequenz ein scharfes Einzelbild des Punktes P zu extrahieren, müssen die einzelnen Bildinformationen zum Punkt P überlagert werden, wobei die sich relativ ändernde Lage des Punktes P berücksichtigt werden muss.

$$P_{avg} = \frac{1}{3} \sum_{i=1}^{3} P_i$$

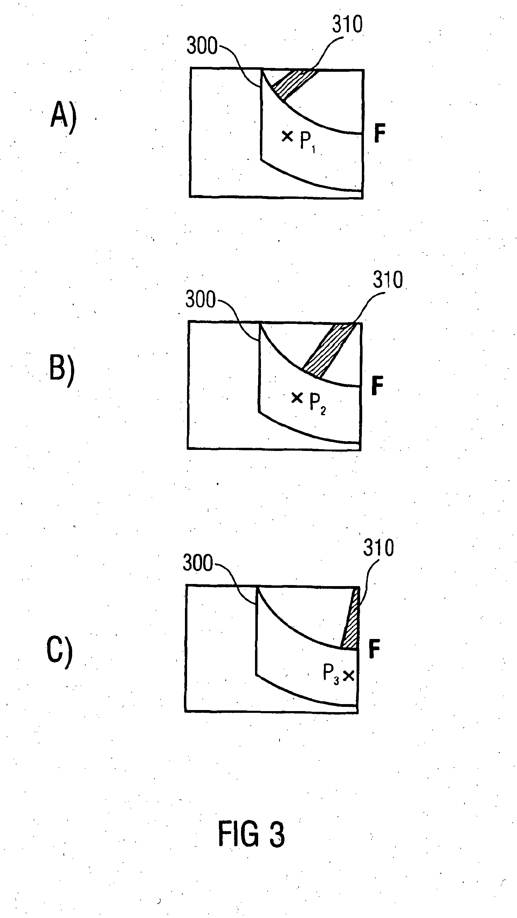

Bei einer dreidimensionalen Bewegung des Objekts vor der Kamera ist die Bestimmung der x(t), y(t) komplexer, da die Projektionen von Volumenelementen je nach Tiefe z(t) schwanken können. Daher wird eine Projektionsfläche F geeignet zu dem dreidimensionalen Raum gelegt, wobei für jeden Punkt auf der Projektionsfläche F eine bijektive Abbildung zu einem Bildpunkt der Abbildung P(F) auf dem Bildsensor festgelegt wird. Jedem Punkt der Projektionsfläche F wird nun ein Geschwindigkeitsvektor zugeordnet, welcher der Geschwindigkeit des realen Objektes entspricht. Damit lässt sich die Position eines Volumenpunktes über eine Bildsequenz vorhersagen, sofern sich dieser Punkt auf der Fläche F befindet. Bewegt sich nun ein Volumenelement des Objekts auf dieser Projektionsfläche F, ist es mittels des Geschwindigkeitsvektors für jeden Punkt auf der Fläche möglich, die Projektion P des Punktes zu bestimmen und damit auch aufzusummieren. Punkte außerhalb der Fläche werden mehr oder weniger verschmiert und damit unscharf. Fig. 3 zeigt diesen komplizierteren Fall.

Fig. 3 (a)-(c) zeigen eine Bildsequenz von drei zeitlich aufeinanderfolgenden Röntgenaufnahmen. In jeder der drei Momentaufnahmen ist ein Teilabschnitt eines sich drehenden Rades 300, mit einer Speiche 310 und einem Punkt P zu sehen, wobei sich der Punkt P relativ zum Bildausschnitt bewegt, was durch die Indizes $P_1$, $P_2$ und $P_3$ verdeutlicht wird. Die Projektionsebene F ist im Vergleich zu Fig. 2 (a)-(c) nun gekippt und die Punkte des Rades vollziehen somit relativ zu F ebenfalls eine Bewegung in z-Richtung z = z(t).

Da die Projektionsebene F von den eigentlichen Bilddaten unabhängig ist, können auch mehrere Projektionsflächen F(m) festgelegt werden, um mehrere Schichten des Rades 300 abzubilden. Beispielsweise werden diese Projektionsflächen derart gewählt, dass die relative Bewegungsvektoren ihrer Punkte, mit der Bewegung der Volumenpunkte des abzubildenden Objekts korrelieren.

Die Bestimmung der für die Pfadbestimmung relevanten Daten kann entweder aus den Bilddaten direkt geschehen (z. B. durch Bestimmung markanter Objektdetails/Features und Verfolgung dieser Details über Bildsequenzen und Interpolation dieser Pfaddaten für zwischen diesen Features liegenden Bildpunkten) oder auch durch eine mathematische Beschreibung der Projektion abhängig von den geometrischen Gegebenheiten des Versuchsaufbaus (Position des Objektmanipulators, Aufnahmegeometrie, Geschwindigkeiten etc.).

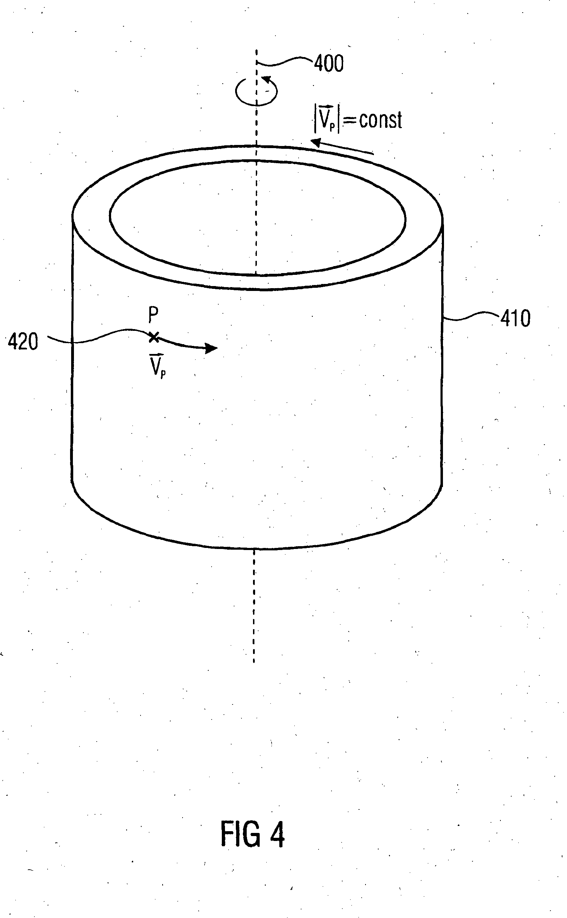

Fig. 4 zeigt einen mit konstanter Rotationsgeschwindigkeit $v_r$ um seine Achse 400 rotierenden Zylinder 410. Die Geschwindigkeit $v_p$ in kartesischen Koordinaten ist jedoch nicht in alle Raumachsen konstant,

$$\ddot{\bar{v}}_P \neq const$$

sie kann in drei Komponenten v(x), v(y) und v(z) bzw. v(x, y, z) zerlegt werden.

An jeder Stelle P = (x, y, z) 420, im Raum ist jedoch der Betrag der Geschwindigkeit konstant.

$$\left|\dot{\bar{v}}_P\right| = const$$

Das bedeutet, dass für einen Punkt im Raum innerhalb des Zylinders an der Stelle P 420 die Geschwindigkeit unabhängig von der Zeit bekannt ist. Dies gilt für alle Punkte innerhalb des Zylinders. Damit kann zu jedem Zeitpunkt aus den Koordinaten eines Punktes innerhalb des Zylinders eine Geschwindigkeit v(x,y,z) bzw. die einzelnen Komponenten berechnet werden, und das einzig aus der Kenntnis seiner Position im Raum zu einem gegebenen Zeitpunkt.

Projiziert man nun einen Punkt auf einen zweidimensionalen Schirm, bewegt sich dieser mit der Geschwindigkeit v(x,y), da die z-Achse senkrecht auf dem Projektionsschirm steht. Das bedeutet, dass für jeden Punkt des Zylinders ein Geschwindigkeitsvektor in (x,y)-Ebene angegeben werden kann, der allein von den Koordinaten (x, y) auf dem Leuchtschirm abhängt.

Wird nun eine Serie von Aufnahmen gemacht, kann anhand dieses Geschwindigkeitsvektors leicht die Position bestimmt werden, an der sich die Projektion des Punktes im nächsten Bild befinden wird.

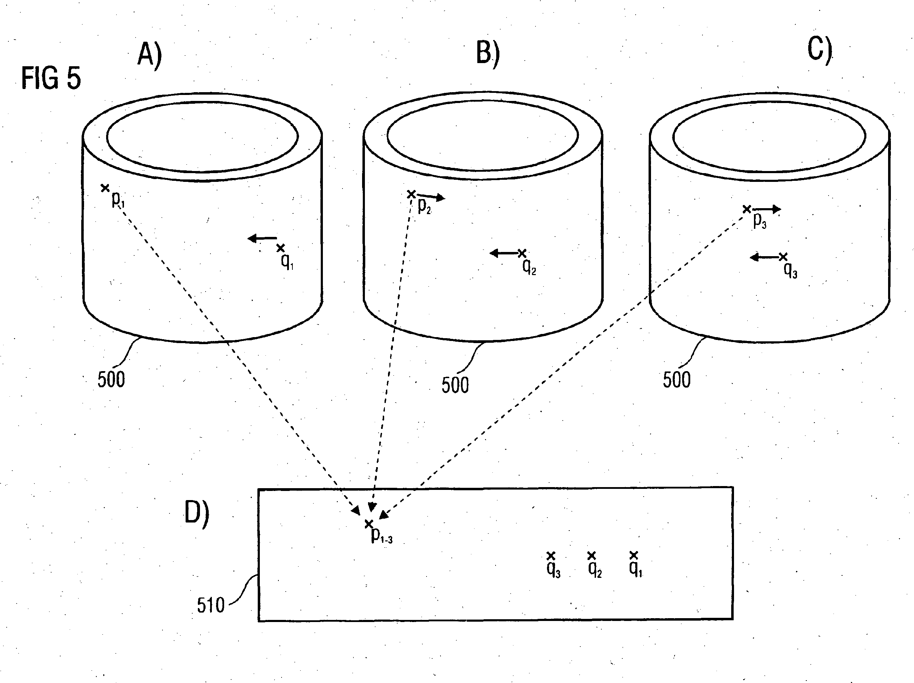

Fig. 5 (a)-(c) zeigen eine Bildsequenz von drei zeitlich aufeinanderfolgenden Momentaufnahmen zu drei Zeitpunkten. In jeder der drei Momentaufnahmen ist ein sich drehender Zylinder 500 zu sehen, sowie zwei sich bewegende p und q. Der Punkt p befindet sich auf der dem Betrachter zugewandten Seite des Zylinders 500 (Vorderseite) und bewegt sich somit von links nach rechts. Der Punkt q befindet sich auf der dem Betrachter abgewendeten Seite des Zylinders 500 (Rückseite) und bewegt sich somit von rechts nach links. Durch die Indizes an $p_1$, $p_2$ und $p_3$, bzw. an $q_1$, $q_2$ und $q_3$, wird die Position der Punkte zu den drei aufeinanderfolgenden Zeitpunkten verdeutlicht.

Unterhalb der Fig. 5 (a)-(c) ist in Fig. 5 (d) ein Röntgenbild für die Projektion des Punktes p abgebildet 510. Im Röntgenbild 510 des Zylinders 500 sind beide Punkte p und q erkennbar, wobei der Punkt p immer wieder auf den gleichen Bildpunkt in der Projektionsebene abgebildet wird und der Punkt q sich auch in der Projektionsebene bewegt. Durch eine solche Überlagerung wird erreicht, dass der Punkt p scharf dargestellt wird und der Punkt q verschmiert.

Es ist möglich einen Objektabschnitt (auch engl. Area of Interest = AOI) anzugeben, z. B. die abgerollte Oberfläche der Vorderseite des Zylinders. Für diesen Objektabschnitt sind nach Fig. 5 die Geschwindigkeiten ihrer Punkte v(x,y) bekannt, so dass man für jeden Punkt des Objektabschnitts angeben kann, wo sich dieser im nächsten Bild der Sequenz befinden wird und aus allen Projektionen dieses Punktes der arithmetische Mittelwert gebildet werden kann. Dieses Verfahren kann für alle Punkte des Objektabschnitts wiederholt werden.

Der Punkt p wird, da er sich auf der Vorderseite und damit innerhalb des Objektabschnitts befindet, aus allen Projektionen auf dieselbe Stelle abgebildet, und damit der Bildwert (Helligkeit) über N (in Fig. 5 ist N=3) Aufnahmen gemittelt.

Der Punkt q dagegen geht in der Projektion an unterschiedlichen Stellen in die Helligkeit anderer Punkte mit ein, denn er befindet sich außerhalb des Objektabschnitts. Er verfälscht damit zwar die Gesamthelligkeit von anderen Punkten innerhalb der Projektionsebene, aber mit zunehmender Anzahl'an Aufnahmen tritt der Anteil von Punkt q in den Hintergrund. Das gleiche gilt für den Rauschanteil im Bild. Der (zeitlich konstante) Raumteil im Bild tritt bei Mittelung über N Bilder ebenfalls in den Hintergrund (Faktor $\sqrt{N}$, also halbes Rauschen nach vier Aufnahmen etc.).

Das Ergebnis ist ein Bild, in dem Details innerhalb des Objektabschnitts scharf und kontrastreich zu sehen sind, und Details außerhalb des Objektabschnitts und das Bildrauschen unscharf bzw. verschmiert sind.

Im bevorzugten Ausführungsbeispiel ist der Zylinder die Felge eines Aluminiumrades. Die verschmierten Bildteile können durch Bildverarbeitung leicht von scharfen Bildteilen getrennt und diese dann gegebenenfalls als Fertigungsfehler klassifiziert werden. Als Aufnahmeeinheit kann z. B. ein Bildverstärker mit nachgeschalteter Videokamera dienen, die Bildsequenzen von ca. 25 - 30 Bildern pro Sekunde erzeugt.

Die vorliegende Erfindung ist nicht auf rotatorische Bewegungen beschränkt. Ist die Voraussagbarkeit der projizierten Positionen von einem Bild der Sequenz zum nächsten gegeben, so können beliebig Objektabschnitte projiziert werden. Damit beschreibt jeder projizierte Punkt eines Objektabschnitts eine Bahn, und in Kenntnis aller Bahnen aller Punkte des Objektabschnitts bildet die vorliegende Erfindung solche, und nur solche Punkte scharf ab, deren Projektionen sich auf genau den vorberechneten Bahnen bewegen.

Die vorliegende Erfindung ist nicht auf konstante Geschwindigkeiten beschränkt, sondern eignet sich auch für nichtkonstante Geschwindigkeiten, zu jedem Zeitpunkt einer Momentaufnahme muss dann ein separates Kennfeld aus Geschwindigkeitsvektoren bestimmt werden.

Die Geschwindigkeitsvektoren v(x,y) können entweder aus einem präparierten Prüfkörper (z. B. Prüfkörper mit Bohrung) oder rein mathematisch aus der Kenntnis der Aufnahmegeometrie bestimmt werden.

Die vorliegende Erfindung bezieht sich neben der Röntgenbildtechnik allgemein auf bildgebende Verfahren, wie beispielsweise auch Ultra-Schall-Verfahren, abbildendes Radar etc.

Weiterhin erlaubt die erfindungsgemäße Vorrichtung, die Speicherung bzw. die Eingabe von mehreren zu untersuchenden Objektabschnitten, die dann gleichzeitig durch die beschriebene Vorrichtung bestimmt werden können. Eine Realisierung der vorliegenden Erfindung könnte beispielsweise in einer Fertigung von Bauteilen, mehrere Schnittbilder erzeugen, diese gleichzeitig darstellen und somit eine schnellere, effizientere und umfassendere Prüfung ermoglichen.

Im Folgenden werden anhand der Fig. 1 weitere Ausführungsbeispiele betrachtet, die eine Bestimmung der Relativbewegung des zu untersuchenden Objektes 110 erlauben. Praxisuntersuchungen haben gezeigt, dass die Bewegung des Prüfobjektes problematisch sein kann, selbst wenn diese gleichförmig ist. Aus diesem Grund können Ausführungsbeispiele Einrichtungen zum Bestimmen der Relativbewegung des zu untersuchenden Objektes 110 basierend auf den Informationen aus dem ersten und dem zweiten Bild aufweisen. Die Relativbewegung des zu untersuchenden Objektes 110 kann dabei beispielsweise basierend auf markanten Details des zu untersuchenden Objektes 110 bestimmt werden. Bei den markanten Details kann es sich z.B. um Ecken, Kanten, helle oder dunkle Stellen, Öffnungen oder Bohrungen oder um andere geometrische Details der Abbildungen des Objektes handeln, die über eine Bildverarbeitung identifiziert werden können.

Beispielsweise können durch einen Gießprozess entstandene Grate und Unebenheiten im Zusammenspiel mit einem Handhabungsapparat zu einem Verspringen eines Prüflings führen und somit ein Verspringen der jeweiligen Projektion hervorrufen. Unter einem Verspringen der Projektion ist hier zu verstehen, dass beispielsweise die Mitte des Prufobjektes nicht immer im Zentrum eines Bildes liegt, sondern lediglich in einem Bereich mit einer gewissen Ausdehnung, beispielsweise um das Zentrum herum. In Ausführungsbeispielen kann dieser Bereich beispielsweise 30 Pixel umfassen und würde ein herkömmliches Prüfverfahren in der Praxis ohne weitere Schritte unbrauchbar machen.

In Ausführungsbeispielen kann ferner eine Modellierung der Objektbewegung als ungefähre Vorhersage der tatsächlichen Objektbewegung herangezogen werden. Beispielsweise können auch hier beliebige Objektdetails, z.B. Ecken oder Kanten, oder auch besonders helle oder dunkle Details, in einem aktuellen Bild detektiert werden, und anhand einer ungefähren Vorhersage in einem darauffolgenden Bild wiedergefunden werden. Aus einer Verschiebung der vorhergesagten Koordinaten zu den tatsächlichen Koordinaten kann die Vorhersage aller Bildpixel auf Basis der wenigen Bildpixel eines markanten Details korrigiert werden.

In Ausführungsbeispielen kann demnach die Einrichtung zum Bestimmen der Relativbewegung des zu untersuchenden Objektes 110 ferner ausgebildet sein, um aus einer Lage eines markanten Details in dem ersten Bild eine Schätzung einer Lage des Bilddetails in dem zweiten Bild zu berücksichtigen. Die Einrichtung zum Bestimmen kann ferner ausgebildet sein, um die Relativbewegung des zu untersuchenden Objektes zu modellieren.

Diese Vorgehensweise kann besonders vorteilhaft sein, wenn über die Eigenschaften des Versatzes des zu untersuchenden Objektes 110 Vorabannahmen gemacht werden können. In einem Ausführungsbeispiel, in dem Aluminiumräder geprüft werden sollen, werden diese am Rand gegriffen, so dass sich Gussgrate am Rand beispielsweise in einer Verschiebung in der Rotationsebene auswirken. Eine solche systematische Verschiebung kann in einem Gleichungssystem ausgedrückt werden, mit dem die Koordinaten global korrigierbar sind, sofern genügend Koordinatenpaare gefunden werden, die zur Lösung des Gleichungssystems verwendbar sind.

In einem Ausführungsbeispiel kann die Verschiebung eines senkrecht auf die Drehachse aufgenommenen Aluminiumrades, beispielsweise mit Blick auf die Nabe, betrachtet werden. Durch einen Grat am Rand kann es in einer aktuellen Aufnahme beispielsweise um 20 Pixel in Richtung 6-Uhr-Position nach unten verschoben vorliegen. Aus der Aufnahmegeometrie kann jedoch bekannt sein, dass Grate lediglich Verschiebungen in x- oder y-Richtung verursachen, jedoch keine Verkippung, Verdrehung, usw. hervorrufen können. In diesem Ausführungsbeispiel genügt es dann beispielsweise ein Detail des Objektschwerpunktes, wobei es sich in diesem Fall um das Zentrum der Felge oder der Nabe handeln könnte, zu berechnen. Dieser kann dann um die bereits oben erwähnten 20 Pixel in y-Richtung, d.h. nach unten, verschoben werden. Damit können dann alle Vorhersagen der Pixelkoordinaten entsprechend korrigiert werden und das Integrationsverfahren angewendet werden.

Abhängig von den Gegebenheiten kann das erfindungsgemäße Verfahren in Hardware oder in Software implementiert werden. Die Implementation kann auf einem digitalen Speichermedium, insbesondere einer Diskette oder CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt kann die Erfindung somit als ein Computerprogramm mit einem Programmcode zur Durchführung des Verfahrens realisiert werden, wenn das Computerprogramm auf einem Computer abläuft. Ausführungsbeispiele umfassen eine Vorrichtung zum Erzeugen einer zweidimensionalen Darstellung eines beliebig innerhalb eines Objekts 110 angeordneten Objektabschnitts, mit einer Abbildungseinrichtung 100, die angepasst ist, um ein erstes Bild zu erzeugen, das eine zweidimensionale Projektion des Objekts 110 umfasst, und nachfolgend ein zweites Bild zu erzeugen, das eine weitere zweidimensionale Projektion des Objekts 110 umfasst, während sich das Objekt 110 und die Abbildungseinrichtung 100 relativ zueinander bewegen.

Die Vorrichtung umfasst ferner eine Signalverarbeitungseinrichtung 120, die angepasst ist, um Informationen über eine Lage und eine Form des interessierenden Objektabschnitts in dem Objekt 110 und dessen Relativbewegung zu empfangen, um basierend auf den empfangenen Informationen Punkte in Bildabschnitten in dem ersten Bild und in dem zweiten Bild, die dem interessierenden Objektabschnitt zugeordnet sind, zusammenzufassen. Die Vorrichtung umfasst ferner eine Einrichtung zum Bestimmen der Relativbewegung des zu untersuchenden Objektes 110, basierend auf Informationen aus dem ersten Bild und dem zweiten Bild, wobei die Einrichtung zum Bestimmen ausgebildet ist, um die Relativbewegung des zu untersuchenden Objektes 110 basierend auf markanten Details des zu untersuchenden Objektes 110 oder einer in dem Objekt eingearbeiteten Probe zu bestimmen.

In Ausführungsbeispielen kann die Vorrichtung zum Erzeugen einer Mehrzahl von zweidimensionalen Darstellungen beliebig innerhalb eines Objekts 110 angeordneter Objektabschnitte angepasst sein, wobei die Signalverarbeitungseinrichtung 120 angepasst sein kann, um für jeden der dargestellten Objektabschnitte die Informationen über deren Form und Lage in dem Objekt 110 zu erfassen. Die Signalverarbeitungseinrichtung 120 kann angepasst sein, um eine zweidimensionale Projektion des Objektabschnitts aus dem ersten Bild und dem zweiten Bild zu erzeugen. Die Signalverarbeitungseinrichtung 120 kann ferner angepasst sein, um die Bildabschnitte aus dem ersten Bild und aus dem zweiten Bild zu überlagern.

In weiteren Ausführungsbeispielen können die Informationen über die Lage und die Form des darzustellenden Objektabschnitts Volumenpunkte in dem Objekt 110 umfassen, wobei die Signalverarbeitungseinrichtung 120 angepasst sein kann, um basierend auf der Relativbewegung des Objekts 110 eine Position des dem Objektabschnitt zugeordneten Volumenpunktes in dem ersten Bild und dem zweiten Bild zu berechnen. Die Einrichtung zum Bestimmen kann ausgebildet sein, um die Relativbewegung eines um eine Achse rotierenden Objektes zu bestimmen. Das Objekt kann beispielsweise ein Prüfling sein, der durch Gussgrate aus einer Rotationsebene oder einer Aufnahmegeometrie verschoben ist.

Die Einrichtung zum Bestimmen der Relativbewegung des zu untersuchenden Objektes 110 kann ferner ausgebildet sein, um aus einer Lage eines markanten Details im ersten Bild eine Schätzung einer Lage des markanten Details in dem zweiten Bild zu berücksichtigen. Die Einrichtung zum Bestimmen kann ferner ausgebildet sein, um die Relativbewegung des zu untersuchenden Objektes 110 zu modellieren. Die markanten Details können dabei beispielsweise Ecken, Kanten, helle oder dunkle Stellen, Öffnungen oder Bohrungen des zu untersuchenden Objektes 110 umfassen. Die Relativbewegung kann eine lineare Bewegung sein. Die Relativbewegung kann auch eine Rotationsbewegung sein.

Der Objektabschnitt kann mit Ausnahme eines zur Rotations-achse radial-symmetrisch angeordneten Teilbereichs eine beliebige Form und Lage in dem Objekt 110 aufweisen. Die Vorrichtung kann zur Projektion eines dreidimensionalen Objekts auf einen zweidimensionalen Detektor ausgebildet sein. Die Vorrichtung kann zur Berechnung der Positionen der projizierten Bildpunkte einer Fläche im Raum entsprechend den Positionen einer Teilmenge der Volumenpunkte der bewegten Objekts in den Einzelaufnahmen ausgebildet sein.

Die Vorrichtung kann auch zur Berechnung der Fläche im Raum anhand von Bilddetails in den aufgenommenen Bildern oder z.B. eines Kalibrierkörpers und/oder zur Mittelwertbildung über zusammengehörige Projektionen eines Volumenpunktes des bewegten Objektes ausgebildet sein. Die Vorrichtung kann zur Berechnung von mehreren Flächen verschiedener Form und Lage aus einem Satz von Aufnahmen ausgebildet sein.

Ausführungsbeispiele können auch ein Verfahren zum Erzeugen einer zweidimensionalen Darstellung eines beliebig innerhalb eines sich bewegenden Objekts 110 angeordneten Objektabschnitts umfassen, mit einem Schritt des Erfassens eines ersten Bildes, das eine zweidimensionale Projektion des Objekts umfasst. Das Verfahren weißt ferner eine Schritt des Erfassens eines zweiten Bildes auf, das eine weitere zweidimensionale Projektion des Objekts umfasst und einen Schritt des Empfangens von Informationen über eine Lage und eine Form des interessierenden Objektabschnitts in dem Objekt. Das Verfahren umfasst ferner einen Schritt des Bestimmens einer Relativbewegung des zu untersuchenden Objektes, basierend auf Informationen aus dem ersten Bild und dem zweiten Bild über markante Details des zu untersuchenden Objektes oder einer in dem Objekt eingearbeiteten Probe und basierend auf den empfangenen Informationen, einen Schritt des Zusammenfassens von Punkten von Bildabschnitten in dem ersten und in dem zweiten Bild, die dem interessierenden Objektabschnitt zugeordnet sind.

Das Verfahren kann zum Erzeugen einer Mehrzahl von zweidimensionalen Darstellungen beliebig innerhalb eines Objekts 110 angeordneter Objektabschnitte angepasst sein, und einen Schritt des Empfangens von Informationen über Form und Lage innerhalb des Objekts 110 für jeden der darzustellenden Objektabschnitte aufweisen. Das Verfahren kann darüber hinaus einen Schritt des zweidimensionalen Projizierens des Objektabschnitts aus dem ersten Bild und aus dem zweiten Bild umfassen. Das Verfahren kann einen Schritt Überlagerns der Bildabschnitte aus dem ersten Bild und dem zweiten Bild aufweisen. Das Verfahren kann auch einen Schritt des Erfassens von Volumenpunktinformationen über die Lage und die Form des darzustellenden Objektabschnitts und einen Schritt des Berechnens einer Position der Volumenpunkte basierend auf der Relativbewegung des Objekts in dem ersten Bild und dem zweiten Bild umfassen.

In Ausführungsbeispielen kann das Verfahren auch einen Schritt des Bestimmens der Relativbewegung eines um eine Achse rotierenden Objektes aufweisen. Das Objekt kann ein Prüfling sein, der durch Gussgrate aus einer Rotationsebene oder einer Aufnahmegeometrie verschoben ist. Der Schritt des Bestimmens kann ferner einen Schritt des Schätzens einer Lage eines markanten Details in dem zweiten Bild basierend auf einer Lage des markanten Details in dem ersten Bild umfassen. Der Schritt des Bestimmens kann ferner einen Schritt des Modellierens der Relativbewegung des zu untersuchenden Objektes umfassen. Die markanten Details können beispielsweise Ecken, Kanten, helle oder dunkle Stellen, Öffnungen oder Bohrungen des zu untersuchenden Objektes umfassen.

Das Objekt kann sich linear bewegen und/oder auch rotieren. Der Objektabschnitt kann eine beliebige Form und Lage mit Ausnahme eines zur Rotationsachse radial symmetrisch angeordneten Teilbereichs aufweisen.

Bezugszeichenliste

| | |
|---|---|
| 100a | Abbildungseinrichtung |
| 100b | Röntgenquelle |
| 110 | Objekt |
| 120 | Signalverarbeitungseinrichtung |
| | |
| 200 | Rad |
| 210 | Speiche |
| $P_1$ | Punkt P zum Zeitpunkt 1 |
| $P_2$ | Punkt P zum Zeitpunkt 2 |
| $P_3$ | Punkt P zum Zeitpunkt 3 |
| | |
| 300 | Rad |
| 310 | Speiche |
| $P_1$ | Punkt P zum Zeitpunkt 1 |
| $P_2$ | Punkt P zum Zeitpunkt 2 |
| $P_3$ | Punkt P zum Zeitpunkt 3 |
| F | Projektionsfläche |
| | |
| 400 | Rotationsachse |
| 410 | Zylinder |
| 420 | Beliebiger Punkt P |

500    Zylinder
510    Projektionsebene
$p_1$    Punkt p zum Zeitpunkt 1
$p_2$    Punkt p zum Zeitpunkt 2
$p_3$    Punkt p zum Zeitpunkt 3 ,
$q_1$    Punkt q zum Zeitpunkt 1
$q_2$    Punkt q zum Zeitpunkt 2
$q_3$    Punkt q zum Zeitpunkt 3

**Patentansprüche**

1. Vorrichtung zum Erzeugen einer zweidimensionalen Darstellung eines beliebig innerhalb eines Objekts (110) angeordneten Objektabschnitts, mit folgenden Merkmalen:

    einer Abbildungseinrichtung (100), die angepasst ist, um ein erstes Bild zu erzeugen, das eine zweidimensionale Projektion des Objekts (110) umfasst, und nachfolgend ein zweites Bild zu erzeugen, das eine weitere zweidimensionale Projektion des Objekts (110) umfasst, während sich das Objekt (110) und die Abbildungseinrichtung (100) relativ zueinander bewegen;

    einer Signalverarbeitungseinrichtung (120), die angepasst ist, um Informationen über eine Lage und eine Form des interessierenden Objektabschnitts in dem Objekt (110) und dessen Relativbewegung zu empfangen, um basierend auf den empfangenen Informationen Punkte in Bildabschnitten in dem ersten Bild und in dem zweiten Bild, die dem interessierenden Objektabschnitt zugeordnet sind, zusammenzufassen; und

    einer Einrichtung zum Bestimmen der Relativbewegung des zu untersuchenden Objektes (110), basierend auf Informationen aus dem ersten Bild und dem zweiten Bild, wobei die Einrichtung zum Bestimmen ausgebildet ist, um die Relativbewegung des zu untersuchenden Objektes (110) basierend auf markanten Details des zu untersuchenden Objektes (110) oder einer in dem Objekt eingearbeiteten Probe zu bestimmen.

2. Vorrichtung gemäß Anspruch 1, die angepasst ist, zum Erzeugen einer Mehrzahl von zweidimensionalen Darstellungen beliebig innerhalb eines Objekts (110) angeordneter Objektabschnitte, wobei die Signalverarbeitungseinrichtung (120) angepasst ist, um für jeden der dargestellten Objektabschnitte die Informationen über deren Form und Lage in dem Objekt (110) zu erfassen.

3. Vorrichtung gemäß Anspruch 1 oder 2, bei der die Signalverarbeitungseinrichtung (120) angepasst ist, um eine zweidimensionale Projektion des Objektabschnitts aus dem ersten Bild und dem zweiten Bild zu erzeugen.

4. Vorrichtung gemäß einem der Ansprüche 1 bis 3, bei der die Signalverarbeitungseinrichtung (120) angepasst ist, um die Bildabschnitte aus dem ersten Bild und aus dem zweiten Bild zu überlagern.

5. Vorrichtung gemäß einem der Ansprüche 1 bis 4, bei der die Informationen über die Lage und die Form des darzustellenden Objektabschnitts Volumenpunkte in dem Objekt (110) umfassen, wobei die Signalverarbeitungseinrichtung (120) angepasst ist, um basierend auf der Relativbewegung des Objekts (110) eine Position des dem Objektabschnitt zugeordneten Volumenpunktes in dem ersten Bild und dem zweiten Bild zu berechnen.

6. Vorrichtung gemäß einem der Ansprüche 1 bis 5 bei der die Einrichtung zum Bestimmen ausgebildet ist, um die Relativbewegung eines um eine Achse rotierenden Objektes zu bestimmen.

7. Verfahren zum Erzeugen einer zweidimensionalen Darstellung eines beliebig innerhalb eines sich bewegenden Objekts (110) angeordneten Objektabschnitts, mit folgenden Schritten:

    Erfassen eines ersten Bildes, das eine zweidimensionale Projektion des Objekts umfasst,
    Erfassen eines zweiten Bildes, das eine weitere zweidimensionale Projektion des Objekts umfasst,
    Empfangen von Informationen über eine Lage und eine Form des interessierenden Objektabschnitts in dem Objekt;
    Bestimmen einer Relativbewegung des zu untersuchenden Objektes, basierend auf Informationen aus dem ersten Bild und dem zweiten Bild über markante Details des zu untersuchenden Objektes oder einer in dem Objekt eingearbeiteten Probe; und
    basierend auf den empfangenen Informationen, Zusammenfassen von Punkten von Bildabschnitten in dem ersten und in dem zweiten Bild, die dem interessierenden Objektabschnitt zugeordnet sind.

8. Verfahren gemäß Anspruch 7 zum Erzeugen einer Mehrzahl von zweidimensionalen Darstellungen beliebig innerhalb eines Objekts (110) angeordneter Objektabschnitte, mit folgenden Schritten:

Empfangen von Informationen über Form und Lage innerhalb des Objekts (110) für jeden der darzustellenden Objektabschnitte.

9. Verfahren gemäß Anspruch 7 oder 8, mit folgenden Schritten:

Zweidimensionales Projizieren des Objektabschnitts aus dem ersten Bild und aus dem zweiten Bild.

10. Verfahren gemäß einem der Ansprüche 7 bis 9, mit folgenden Schritten:

Überlagern der Bildabschnitte aus dem ersten Bild und dem zweiten Bild.

11. Verfahren gemäß einem der Ansprüche 7 bis 10, mit folgenden Schritten:

Erfassen von Volumenpunktinformationen über die Lage und die Form des darzustellenden Objektabschnitts; und Berechnen einer Position der Volumenpunkte basierend auf der Relativbewegung des Objekts in dem ersten Bild und dem zweiten Bild.

12. Verfahren gemäß einem der Ansprüche 7 bis 11 mit folgenden Schritten:

Bestimmen der Relativbewegung eines um eine Achse rotierenden Objektes.

13. Verfahren gemäß Anspruch 12, bei dem das Objekt ein Prüflings ist, der durch Gussgrate aus einer Rotationsebene oder einer Aufnahmegeometrie verschoben ist.

14. Verfahren gemäß Anspruch 13, bei dem der Schritt des Bestimmens ferner einen Schritt des Schätzens einer Lage eines markanten Details in dem zweiten Bild basierend auf einer Lage des markanten Details in dem ersten Bild umfasst.

15. Computerprogramm mit einem Programmcode zur Durchführung des Verfahrens nach einem der Ansprüche 7 bis 14, wenn das Programm auf einem Computer abläuft.

**Claims**

1. An apparatus for generating a two-dimensional representation of an object portion arbitrarily arranged within an object (110), the apparatus comprising:

an imaging means (100) adapted to generate a first image comprising a two-dimensional projection of the object (110), and to subsequently generate a second image comprising a further two-dimensional projection of the object (110), while the object (110) and the imaging means (100) are moving relative to each other; and
a signal processing means (120) adapted to receive information about a position and a shape of the object portion of interest within the object (110) and its relative motion so as to combine, on the basis of the information received, points in image portions within the first image and within the second image which are associated with the object portion of interest; and
a means for determining, on the basis of information from the first and second images, the relative motion of the object (110) to be examined, wherein the means for determining is configured to determine, on the basis of distinctive details of the object (110) to be examined or a probe incorporated in the object, the relative motion of the object (110) to be examined.

2. The apparatus as claimed in claim 1, adapted to generate a plurality of two-dimensional representations of object portions arbitrarily arranged within an object (110), the signal processing means (120) being adapted to detect, for each of the object portions represented, the information about their shapes and positions within the object (110).

3. The apparatus as claimed in claims 1 or 2, wherein the signal processing means (120) is adapted to generate a two-dimensional projection of the object portion from the first and second images.

4. The apparatus as claimed in any of claims 1 to 3, wherein the signal processing means (120) is adapted to superimpose the image portions from the first and second images.

5. The apparatus as claimed in any of claims 1 to 4, wherein the information about the position and the shape of the objection portion to be represented comprises volume dots within the object (110), the signal processing means (120) being adapted to calculate, on the basis of the relative motion of the object (110), a position of the volume dot, associated with the object portion, within the first and second images.

6. The apparatus as claimed in any of claims 1 to 5, wherein the means for determining is configured to determine the relative motion of an object rotating around an axis.

7. A method of generating a two-dimensional representation of an object portion arbitrarily arranged within an object (110), the method comprising:

sensing a first image comprising a two-dimensional projection of the object,
sensing a second image comprising a further two-dimensional projection of the object,
receiving information about a position and a shape of the objection portion of interest within the object and the motion thereof;
determining, on the basis of information from the first and second images about distinctive details of the object (110) to be examined or a probe incorporated in the object, the relative motion of the object (110) to be examined; and
on the basis of the information received, combining points of image portions, within the first and second images, which are associated with the object portion of interest.

8. The method as claimed in claim 7 for generating a plurality of two-dimensional representations of object portions arbitrarily arranged within an object (110), the method comprising:

receiving information about the shape and position within the object (110) for each of the object portions to be represented.

9. The method as claimed in claims 7 or 8, comprising:

two-dimensionally projecting the objection portion from the first and second images.

10. The method as claimed in any of claims 7 to 9, comprising:

superimposing the image portions from the first and second images.

11. The method as claimed in any of claims 7 to 10, comprising:

sensing volume-dot information about the position and the shape of the objection portion to be represented; and
calculating a position of the volume dots on the basis of the relative motion of the object within the first and second images.

12. The method as claimed in any of claims 7 to 11, comprising:

determining the relative motion of an object rotating around an axis.

13. The method as claimed in claim 12, wherein the object is a device under test that is shifted from a rotational plane or a picture-taking geometry by casting burrs.

14. The method as claimed in claim 13, wherein the step of determining further comprises a step of estimating a position of a distinctive detail within the second image on the basis of a position of the distinctive detail within the first image.

15. A computer program comprising a program code for performing the method as claimed in any of claims 7 to 14, when the program runs on a computer.

**Revendications**

1. Dispositif pour générer une représentation bidimensionnelle d'un segment d'objet disposé de manière arbitraire à l'intérieur d'un objet (110), aux caractéristiques suivantes:

   un moyen de reproduction (100) adapté pour générer une première image comprenant une projection bidimensionnelle de l'objet (110), et pour générer ensuite une deuxième image comprenant une autre projection bidimensionnelle de l'objet (110), tandis que l'objet (110) et le moyen de reproduction (100) se déplacent l'un par rapport à l'autre;
   un moyen de traitement de signal (120) adapté pour recevoir des informations sur une position et une forme du segment d'objet d'intérêt dans l'objet (110) et son mouvement relatif, pour regrouper, sur base des informations reçues, des points dans des segments d'image dans la première image et dans la deuxième image qui sont associés au segment d'objet d'intérêt; et
   un moyen pour déterminer le mouvement relatif de l'objet (110) à examiner sur base des informations de la première image et de la deuxième image, le moyen pour déterminer étant adapté pour déterminer le mouvement relatif de l'objet (110) à examiner sur base de détails frappants de l'objet (110) à examiner ou d'une sonde incorporée dans l'objet.

2. Dispositif selon la revendication 1 qui est adapté pour générer une pluralité de représentations bidimensionnelles de segments d'objet disposés de manière arbitraire à l'intérieur d'un objet (110), le moyen de traitement de signal (120) étant adapté pour détecter, pour chacun des segments d'objet représentés, les informations sur leur forme et position dans l'objet (110).

3. Dispositif selon la revendication 1 ou 2, dans lequel le moyen de traitement de signal (120) est adapté pour générer une projection bidimensionnelle du segment d'objet à partir de la première image et de la deuxième image.

4. Dispositif selon l'une des revendications 1 à 3, dans lequel le moyen de traitement de signal (120) est adapté pour superposer les segments d'image de la première image et de la deuxième image.

5. Dispositif selon l'une des revendications 1 à 4, dans lequel les informations sur la position et la forme du segment d'objet à représenter comprennent des points de volume dans l'objet (110), le moyen de traitement de signal (120) étant adapté pour calculer, sur base du mouvement relatif de l'objet (110), une position du point de volume associé au segment d'objet dans la première image et la deuxième image.

6. Dispositif selon l'une des revendications 1 à 5, dans lequel le moyen pour déterminer est adapté pour déterminer le mouvement relatif d'un objet tournant autour d'un axe.

7. Procédé pour générer une représentation bidimensionnelle d'un segment d'objet disposé de manière arbitraire à l'intérieur d'un objet se déplaçant (110), aux étapes suivantes consistant à:

   détecter une première image comprenant une projection bidimensionnelle de l'objet,
   détecter une deuxième image comprenant une autre projection bidimensionnelle de l'objet,
   recevoir des informations sur une position et une forme du segment d'objet d'intérêt dans l'objet;
   déterminer un mouvement relatif de l'objet à examiner, sur base des informations de la première image et de la deuxième image sur des détails frappants de l'objet à examiner ou d'une sonde incorporée dans l'objet; et
   sur base des informations reçues, regrouper des points de segments d'image dans la première et dans la deuxième image qui sont associés au segment d'objet d'intérêt.

8. Procédé selon la revendication 7 pour générer une pluralité de représentations bidimensionnelles de segments d'objet disposés de manière arbitraire à l'intérieur d'un objet (110), aux étapes suivantes consistant à:

   recevoir des informations sur la forme et la position à l'intérieur de l'objet (110) pour chacun des segments d'objet à représenter.

9. Procédé selon la revendication 7 ou 8, aux étapes suivantes consistant à:

projeter de manière bidimensionnelle le segment d'objet à partir de la première image et de la deuxième image.

10. Procédé selon l'une des revendications 7 à 9, aux étapes suivantes consistant à:

superposer les segments d'image de la première image et de la deuxième image.

11. Procédé selon l'une des revendications 7 à 10, aux étapes suivantes consistant à:

détecter des informations de point de volume sur la position et la forme du segment d'objet à représenter; et calculer une position des points de volume sur base du mouvement relatif de l'objet dans la première image et la deuxième image.

12. Procédé selon l'une des revendications 7 à 11, aux étapes suivantes consistant à:

déterminer le mouvement relatif d'un objet tournant autour d'un axe.

13. Procédé selon la revendication 12, dans lequel l'objet est une pièce d'essai décalée par des bavures de moulage par rapport à un plan de rotation ou une géométrie de prise de vue.

14. Procédé selon la revendication 13, dans lequel l'étape de détermination comporte par ailleurs une étape consistant à estimer une position d'un détail frappant dans la deuxième image sur base d'une position du détail frappant dans la première image.

15. Programme d'ordinateur avec un code de programme pour réaliser le procédé selon l'une des revendications 7 à 14 lorsque le programme est exécuté sur un ordinateur.

Relativbewegung → S V E → Objektabschnitts-
Objektabschnitte → zusammenfassungen

120

Bilder

A B E — 100a

Relativbewegung ← Objekt

100

110

Röntgenquelle — 100b

**FIG 1**

FIG 2

**FIG 3**

$\sim 400$

$|\vec{V}_P| = \text{const}$

$\sim 410$

420

P

×

$\vec{V}_P$

FIG 4

FIG 5

A)

B)

C)

D)

$\times\ p_1$

$\times\ q_1$

500

$\times\ p_2$

$\times\ q_2$

500

$\times\ p_3$

$\times\ q_3$

500

$\times\ p_{1-3}$

$\times\ q_3$

$\times\ q_2$

$\times\ q_1$

510

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 69522751 T2
- EP 1225444 A2
- US 20030043962 A1

### In der Beschreibung aufgeführte Nicht-Patentliteratur

- **JING LIU et al.** Generalized Tomosynthesis for Focusing on an Arbitrary Surface. *IEEE Transactions on Medical Imaging,* Juni 1989, vol. 8 (2

- **THOMAS D. KAMPP.** The backprojection method applied to classical tomography. *Med. Phys.,* Mai 1986, vol. 13 (3